(19) Europäisches Patentamt
European Patent Office
Office européen des brevets

(11) **EP 4 764 665 A1**

(12) **EUROPEAN PATENT APPLICATION**
published in accordance with Art. 153(4) EPC

(43) Date of publication:
**24.06.2026  Bulletin 2026/26**

(21) Application number: **24853735.9**

(22) Date of filing: **12.08.2024**

(51) International Patent Classification (IPC):
**G02B 27/28** (2006.01)

(52) Cooperative Patent Classification (CPC):
**G02B 27/01; G02B 27/28**

(86) International application number:
**PCT/CN2024/111425**

(87) International publication number:
**WO 2025/036326 (20.02.2025 Gazette 2025/08)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **14.08.2023  CN 202311020645**

(71) Applicants:
• **Beijing Zitiao Network Technology Co., Ltd.
  Beijing 100190 (CN)**
• **Lemon Inc.
  Grand Cayman, KY1-1205 (KY)**

(72) Inventors:
• **ZHU, Shaopeng
  Beijing 100028 (CN)**
• **ZHANG, Ziyang
  Los Angeles California 90066 (US)**
• **GUO, Xin
  Beijing 100028 (CN)**
• **LI, Xiaokai
  Beijing 100028 (CN)**

(74) Representative: **Marks & Clerk LLP
15 Fetter Lane
London EC4A 1BW (GB)**

(54) **OPTICAL MODULE AND MANUFACTURING METHOD THEREFOR, AND NEAR-TO-EYE DISPLAY DEVICE**

(57)    An optical module and a manufacturing method therefor, and a near-to-eye display device. The optical module has a light incident side (S1) and a light exit side (S2), and comprises a first lens (100), a partial reflector (110), a phase retarder (120), a second lens (130), a reflective polarizer (140), and a light-transmitting structure (150). The partial reflector (110) is arranged on the side of the first lens (100) close to the light incident side (S1), the phase retarder (120) is arranged on the side of the first lens (130) distant from the partial reflector (110), the second lens (130) is arranged on the side of the phase retarder (120) distant from the first lens (100), the reflective polarizer (140) is arranged on the side of the second lens (130) close to the phase retarder (120), and the light-transmitting structure (150) is arranged on the side of the reflective polarizer (140) close to the phase retarder (120). The reflective polarizer (140) has a reflection axis direction and a transmission axis direction which are perpendicular to each other, the light-transmitting structure (150) has a minimum refractive direction, the light-transmitting structure (150) has a minimum refractive index in the minimum refractive direction for linearly polarized light parallel to the minimum refractive direction, and the included angle between the minimum refractive direction and the reflection axis direction is greater than or equal to 70 degrees and less than or equal to 90 degrees, so that the reflective polarizer (140) has a greater reflective polarization ratio.

Fig. 4

**Description**

The present application claims priority of Chinese Patent Application No. 202311020645.7, filed on August 14, 2023, the disclosure of which is incorporated herein by reference in its entirety as part of the present application.

TECHNICAL FIELD

Embodiments of the present disclosure relate to an optical module, a manufacturing method thereof, and a near-eye display device.

BACKGROUND

In virtual reality (VR) devices, a near-eye display device magnifies an image of a display screen through a lens to obtain a sense of immersiveness. At present, there are two main lens technologies: Fresnel lens and ultra-short focal folded optical path (pancake) lens. The ultra-short focal folded optical path (pancake) lens greatly reduce the required distance between the near-eye display device and the human eye by folding the optical path, thereby making the VR device thinner and thinner.

SUMMARY

The key component of the pancake lens that can enable reflection and transmission of the optical path is the reflective polarizing film. Embodiments of the present disclosure provide optical modules that can reduce a reflectivity of polarized light perpendicular to the reflective axis direction while minimizing the impact on a reflectivity of polarized light parallel to the reflective axis direction, thereby the reflective polarizer has a relatively large reflective polarization selectivity ratio.

The embodiment of the present disclosure provides an optical module, a manufacturing method thereof and a near-eye display device.

At least one embodiment of the present disclosure provides an optical module, having a light incident side and a light-exiting side, including: a first lens; a partial reflector, disposed on a side of the first lens close to the light incident side; a phase retarder, disposed on a side of the first lens away from the partial reflector, and configured to change light of a circular polarization state to light of a linear polarization state or to change light of a linear polarization state to light of a circular polarization state; a second lens, disposed on a side of the phase retarder away from the first lens; a reflective polarizer, disposed on a side of the second lens close to the phase retarder; and a light-transmissive structure, disposed on a side of the reflective polarizer close to the phase retarder and spaced apart from the phase retarder, wherein the partial reflector is configured to transmit light incident from the light incident side and configured to reflect light incident from the phase retarder and change a polarization state of the light, the reflective polarizer has a reflective axis direction and a transmissive axis direction perpendicular to each other, the reflective polarizer reflects linearly polarized light parallel to the reflective axis direction in the reflective axis direction and keeps a polarization state of the linearly polarized light unchanged, the reflective polarizer transmits linearly polarized light parallel to the transmissive axis direction in the transmissive axis direction and keeps a polarization state of the linearly polarized light unchanged, the light-transmissive structure has a lowest refraction direction, in the lowest refractive direction, a refractive index of the light-transmissive structure for linearly polarized light parallel to the lowest refraction direction is the lowest, an included angle between the lowest refraction direction and the reflective axis direction is greater than or equal to 70 degrees and less than or equal to 90 degrees.

At least one embodiment of the present disclosure provides a manufacturing method of an optical module, the optical module having a light incident side and a light-exiting side, the manufacturing method including: providing a first lens; providing a partial reflector on a side of the first lens close to the light incident side; providing a phase retarder on a side of the first lens away from the partial reflector, wherein the phase retarder is configured to change light of a circular polarization state to light of a linear polarization state or to change light of a linear polarization state to light of a circular polarization state; providing a second lens on a side of the phase retarder away from the first lens; providing a reflective polarizer on a side of the second lens close to the phase retarder; providing a light-transmissive structure on a side of the reflective polarizer close to the phase retarder, wherein the light-transmissive structure is spaced apart from the phase retarder, wherein the partial reflector is configured to transmit light incident from the light incident side and configured to reflect light incident from the phase retarder and change a polarization state of the light, the reflective polarizer has a reflective axis direction and a transmissive axis direction perpendicular to each other, the reflective polarizer reflects linearly polarized light parallel to the reflective axis direction in the reflective axis direction and keeps a polarization state of the linearly polarized light unchanged, the reflective polarizer transmits linearly polarized light parallel to the transmissive axis direction in the transmissive axis direction and keeps a polarization state of the linearly polarized light unchanged, the light-transmissive structure has a lowest refraction direction, in the lowest refractive direction, a refractive index of the light-transmissive structure for linearly polarized light parallel to the lowest refraction direction is the lowest, an included angle between the lowest refraction direction and the reflective axis direction is greater than or equal to 70 degrees and less than or equal to 90 degrees.

BRIEF DESCRIPTION OF DRAWINGS

In order to clearly illustrate the technical solutions of the embodiments of the present disclosure, the drawings of the embodiments will be briefly described in the following; it is obvious that the described drawings are only related to some embodiments of the present disclosure and thus are not limitative to the present disclosure.

Fig. 1 is a schematic structural diagram of an ultra-short focal folded optical path (pancake) lens;

Fig. 2 is a measured reflectivity of a reflective polarizing film;

Fig. 3 is a measured reflectivity of another reflective polarizing film;

Fig. 4 is a schematic structural diagram of an optical module according to an embodiment of the present disclosure;

Fig. 5 is a schematic view of an optical path of an optical module illustrated by Fig. 4;

Fig. 6 is a schematic partial top view of a laminated structure of a reflective polarizer and a light-transmissive structure according to an embodiment of the present disclosure;

Fig. 7 is a schematic partial cross-sectional view of a laminate structure illustrated by Fig. 6;

Fig. 8 is a schematic partial top view of another laminate structure of a reflective polarizer and a light-transmissive structure according to an embodiment of the present disclosure;

Fig. 9 is a schematic partial cross-sectional view of another laminated structure of a reflective polarizer and a light-transmissive structure according to an embodiment of the present disclosure;

Fig. 10 is a schematic partial cross-sectional view of another laminated structure of a reflective polarizer and a light-transmissive structure according to an embodiment of the present disclosure;

Fig. 11 is a schematic partial cross-sectional view of another laminated structure of a reflective polarizer and a light-transmissive structure according to an embodiment of the present disclosure;

Fig. 12 is a schematic partial cross-sectional view of another laminated structure of a reflective polarizer and a light-transmissive structure according to an embodiment of the present disclosure;

Fig. 13 is a schematic partial cross-sectional view of another laminated structure of a reflective polarizer and a light-transmissive structure according to an embodiment of the present disclosure;

Fig. 14 is a schematic partial cross-sectional view of another laminated structure of a reflective polarizer and a light-transmissive structure according to an embodiment of the present disclosure;

Fig. 15 is a partial structural schematic diagram of another laminated structure of a reflective polarizer and a light-transmissive structure according to an embodiment of the present disclosure;

Fig. 16 is a data comparison of reflective polarization selectivity ratio of a reflective polarizer and a light-transmissive structure according to an embodiment of the present disclosure;

Fig. 17 shows a schematic structural diagram of a near-eye display device according to an embodiment of the present disclosure;

Fig. 18 is a flowchart of a manufacturing method of an optical module according to an embodiment of the present disclosure;

Fig. 19 is a flowchart of a manufacturing method for forming a light-transmissive structure on a side of a reflective polarizer according to an embodiment of the present disclosure; and

Fig. 20 is a schematic diagram of another manufacturing method for forming a light-transmissive structure on a side of a reflective polarizer according to an embodiment of the present disclosure.

DETAILED DESCRIPTION

In order to make the objectives, technical solutions, and advantages of the embodiments of the present disclosure clearer, the technical solutions of the embodiments of the present disclosure will be clearly and completely described below in conjunction with the accompanying drawings of the embodiments of the present disclosure. It is apparent that the described embodiments are part of the embodiments of the present disclosure, not all of the embodiments. Based on the described embodiments of the present disclosure, all other embodiments obtained by those skilled in the art without creative labor are within the scope of protection of the present disclosure.

Unless otherwise defined, technical terms or scientific terms used in this disclosure shall have the usual meaning understood by those of ordinary skill in the art to which this disclosure belongs. The use of the words "first", "second", and similar words in this disclosure does not indicate any order, quantity, or importance, but is only used to distinguish different components. The words "including" or "comprising" and similar words mean that the elements or objects appearing before the word cover the elements or objects listed after the word and their equivalents, without excluding other elements or objects. The words "connected" or "connecting" and similar words are not limited to physical or mechanical connections, but can include electrical connections, whether direct or indirect.

Unless otherwise defined, the features of "parallel", "vertical" and "identical" used in the embodiments of the present disclosure include the strict sense of "parallel", "vertical" and "identical", as well as the situations involving certain errors such as "substantially parallel", "substantially vertical" and "substantially identical". For example, the above-mentioned "substantially" can indicate that the difference value of the compared object is within 10% or 5% of the average value of the compared object. When the number of a component or element is not specifically indicated in the following embodiments of the present disclosure, it means that the component or element can be one or more, or can be understood as at least one. "At least one" refers to one or more, and "more than one" refers to at least two. The "arranged in the same layer" in the embodiments of the present disclosure refers to the relationship between multiple film layers formed by the same material after the same step (e.g., a one-step patterning process). Here, "in the same layer" does not always refer to the thickness of multiple film layers being the same or the height of multiple film layers being the same in the cross-sectional view.

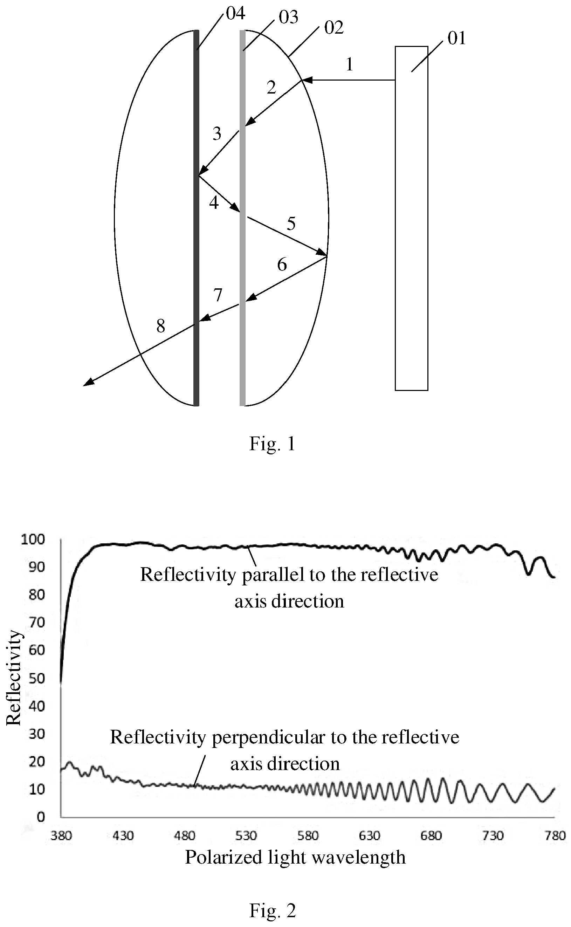

Fig. 1 is a schematic structural diagram of an ultra-short focal folded optical path (pancake) lens. As illustrated by Fig. 1, a surface of a screen 01 is fitted with a wave plate, so that the screen emits right-handed circularly polarized light 1, and a polarization state of the light is unchanged by a transflective film 02, and the light is still right-handed circularly polarized light 2. After passing through a phase retardation film 03, the right-handed circularly polarized light becomes linearly polarized light 3. A polarization direction of the linearly polarized light 3 is parallel to a reflective axis direction of a reflective polarizing film 04, and thus, the linearly polarized light 3 is reflected by the reflective polarizing film 04 as linearly polarized light 4 and becomes right-handed circularly polarized light 5 through the phase retardation film 03 again, and after the right-handed circularly polarized light 5 is reflected by the transflective film 02, reflected light becomes left-handed circularly polarized light 6 due to half-wave loss. The left-handed circularly polarized light 6 passes through the phase retardation film 03, becomes linearly polarized light 7 whose polarization direction is parallel to a transmissive axis direction of the reflective polarizing film 04, and is transmitted through the reflective polarizing film 04 as light 8, and enters the human eye. The pancake lens realizes the folding of the optical path following the path described above, reducing the space required by the lens module.

The reflective polarizing film 04 has a reflective axis and a transmissive axis perpendicular to each other, and a polarized light component whose polarization direction is parallel to a reflective axis direction has an extremely high reflectivity and an extremely low transmittance on the reflective polarizing film 04; a polarized light component whose polarization direction is perpendicular to the reflective axis direction (i.e., parallel to a transmissive axis direction) has an extremely low reflectivity and an extremely high transmittance on the reflective polarizing film.

Thus, a key component of the pancake lens that can realize the reflection and transmission of the optical path described above is the reflective polarizing film 04. An ideal reflective polarizing film completely reflects polarized light that is parallel to its reflective axis direction and has zero reflectivity for polarized light that is perpendicular to the reflective axis direction, but a practical reflective polarizing film still reflects some polarized light that is perpendicular to the reflective axis direction. In the pancake lens, polarized light in the direction parallel to the reflective axis direction reflected by the reflective polarizing film is used for imaging, polarized light in the direction perpendicular to the reflective axis direction is unwanted, and the light that does not participate in the imaging is mixed into the folded optical path, causing phenomena such as stray light and ghosting to affect the visual experience. Therefore, reducing as much as possible the reflectivity of polarized light at the surface of the reflective polarizing film perpendicular to the reflective axis direction to make the reflective polarizing film more ideal is an important factor in improving the visual experience of the pancake lens.

One of the most important properties of a reflective polarizing film is a reflective polarization selectivity ratio, that is to say, a ratio of a reflectivity ($R//$) of the reflective polarizing film for polarized light with a polarization direction parallel to a reflective axis direction to a reflectivity ($R\perp$) of the reflective polarizing film for polarized light with a polarization direction perpendicular to a reflective axis direction, the reflective polarization selectivity ratio = $R///R\perp$. It can be seen that the most desirable reflective polarizing film has a reflective polarization selectivity ratio of infinity. In the pancake lens, the polarized light reflected by the reflective polarizing film in the direction parallel to the reflective axis direction is the "signal" for imaging, and the polarized light reflected by the reflective polarizing film in the direction perpendicular to the reflective axis direction is the "noise" which is unwanted, so that the reflective polarization selectivity ratio can be understood as the "signal-to-noise ratio" of the reflective polarizing film.

The reflective polarizing property of the reflective polarizing film requires a special material structure to be achieved. Currently there are two technical routes: 1. reflective polarization is achieved by stacking many layers of differently oriented stretched birefringent films so that polarized light of different directions interferes between the films; 2. a metal grating is prepared by nanoimprinting on a plastic film to achieve reflective polarization. Neither of these technical routes can achieve extremely high reflective polarization selectivity ratio. For example, for a typical reflective polarizing film, the reflectivity ($R//$) for polarized light with a polarization direction parallel to the reflective axis direction may be 80%, 90%, or 98%, while the reflectivity ($R\perp$) for polarized light with a polarization direction perpendicular to the reflective axis direction may be 20%, 10%, or 8%.

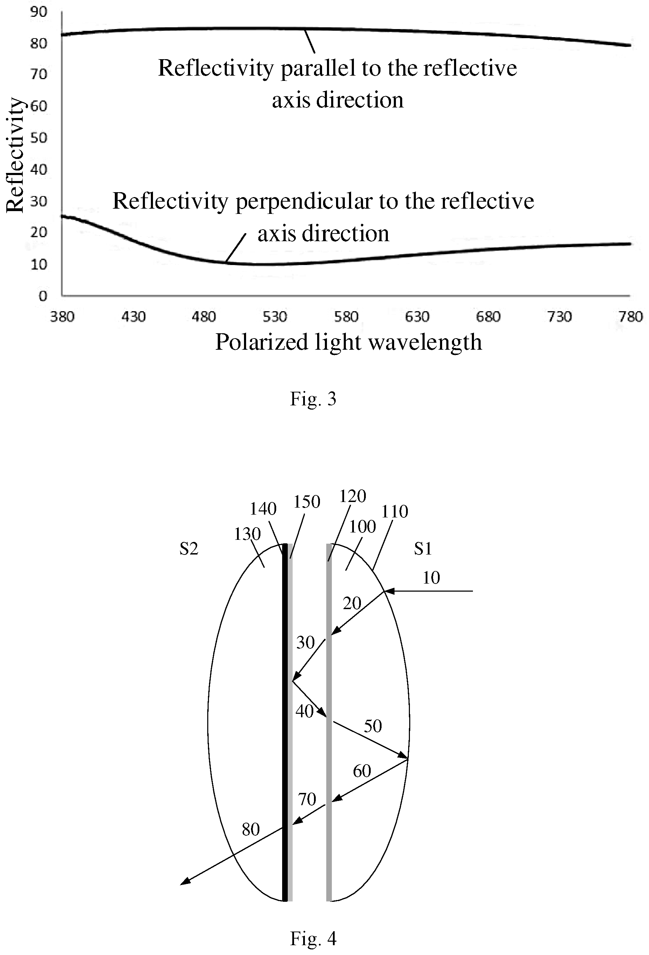

Fig. 2 is a measured reflectivity of a reflective polarizing film; Fig. 3 is a measured reflectivity of another reflective polarizing film. Fig. 2 is a graph showing the reflectivity of the reflective polarizing film realized using the above-mentioned technical route 1, and Fig. 3 is a graph showing the reflectivity of the reflective polarizing film realized using the above-mentioned technical route 2. As illustrated by Figs. 2 and 3, both reflective polarizing films still have the reflectivity of more than 10% for polarized light perpendicular to the reflective axis direction. The reflective polarizing film illustrated by Fig. 2 has a reflective polarization selectivity ratio of 9.30 and the reflective polarizing film illustrated by Fig. 3 has a reflective polarization selectivity ratio of 6.66, if calculated according to the average value.

One of the current solutions to this problem is to form an antireflection film on a surface of the reflective polarizing film, such as coating an antireflection film system. However, the antireflection film system has no polarization selectivity ratio, while capable of reducing the reflectivity of polarized light in a direction perpendicular to the reflective axis direction, also reduces the reflectivity of polarized light in a direction parallel to the reflective axis direction. Although, in combination, the antireflective film system does improve the reflective polarization selectivity ratio, a decrease of the reflectivity of polarized light in the direction of the reflective axis direction may affect the optical efficiency of the lens and also limit further improvement in the reflective polarization selectivity ratio.

With this regard, embodiments of the present disclosure provide an optical module and a manufacturing method of the optical module. The optical module has a light incident side and a light-exiting side, and the optical module includes a first lens, a partial reflector, a phase retarder, a second lens, a reflective polarizer, and a light-transmissive structure. The partial reflector is disposed on a side of the first lens close to the light incident side, and the phase retarder is disposed on a side of the first lens away from the partial reflector and configured to change light of a circular polarization state to light of a linear polarization state, or to change light of a linear polarization state to light of a circular polarization state. The second lens is disposed on a side of the phase away from the first lens, the reflective polarizer is disposed on a side of the second lens close to the phase retarder, and the light-transmissive structure is disposed on a side of the reflective polarizer close to the phase retarder and is spaced apart from the phase retarder. The partial reflector is configured to transmit light incident from the light incident side, and is configured to reflect light incident from the phase retarder and change a polarization state of the light. The reflective polarizer has a reflective axis direction and a transmissive axis direction perpendicular to each other, the reflective polarizer reflects linearly polarized light parallel to the reflective axis direction in the reflective axis direction and keeps a polarization state of the linearly polarized light unchanged, the reflective polarizer transmits linearly polarized light parallel to the transmissive axis direction in the transmissive axis direction and keeps a polarization state of the linearly polarized light unchanged. The light-transmissive structure has a lowest refraction direction, in the lowest refractive direction, a refractive index of the light-transmissive structure for linearly polarized light parallel to the lowest refraction direction is the lowest. An included angle between the lowest refractive direction and the reflective axis direction is greater than or equal to 70 degrees and less than or equal to 90 degrees.

In the optical module provided by embodiments of the present disclosure, assuming that light incident from a light incident side is light of a right-handed circular polarization state, the polarization state of the light is unchanged after passing through the partial reflector and becomes light of a first linear polarization state after passing through the phase retarder, the light is reflected by the reflective polarizer as light of the first linear polarization state when the polarization direction of the light of the first linear polarization state is parallel to the reflective axis direction of the reflective polarizer and becomes light of a right-handed circular polarization state after passing through the phase retarder again, the light of the right-handed circular polarization state becomes light of a left-handed circular polarization state after being reflected by the partial reflector due to half-wave loss, the light of the left-handed circular polarization state becomes light of a second linear polarization state after passing through the phase retarder, the polarization direction of the light of the second linear polarization state is parallel to the transmissive axis direction of the reflective polarizer, so that the light passes through the reflective polarizer to become light, and enters the light-exiting side of the optical module.

In the optical module provided by embodiments of the present disclosure, the side of the reflective polarizer close to the phase retarder is provided with the light-transmissive structure, the light-transmissive structure has the lowest refraction direction, the refractive index of the light-transmissive structure in the lowest refraction direction to polarized light parallel to the lowest refraction direction is lowest, and the included angle between the lowest refraction direction of the light-transmissive structure and the reflective axis direction of the reflective polarizer is greater than or equal to 70 degrees and less than or equal to 90 degrees, so that, for polarized light with a polarization direction perpendicular to the reflective axis direction, because the light-transmissive structure has the lowest refraction direction, reflection of the polarized light with the polarization direction perpendicular to the reflective axis direction can be reduced, and the reflective polarization selectivity ratio of the reflective polarizer is improved, reducing polarized light with the polarization direction perpendicular to the reflective axis direction from entering the folded optical path, avoiding the occurrence of the phenomenon affecting the visual experience such as stray light and ghosting, and improving the clarity, contrast and visual experience of the near-eye display device in which the optical module is located.

As compared to an isotropic antireflection film of the existing art, because the isotropic antireflection film has no polarization selectivity ratio, the isotropic antireflection film reduces the reflectivity of polarized light perpendicular to the reflective axis direction as well as the reflectivity of polarized light parallel to the reflective axis direction. The light-transmissive structure provided by embodiments of the present disclosure has the lowest refraction direction, the light-transmissive structure is anisotropic, the light-transmissive structure has different refractive indexes in the direction perpendicular to the reflective axis direction and parallel to the reflective axis direction, and the included angle of the lowest refraction direction of the light-transmissive structure and the reflective axis direction of the reflective polarizer is greater than or equal to 70 degrees and less than or equal to 90 degrees, thereby, while the reflectivity of the polarized light perpendicular to the reflective axis direction can be reduced, the influence of the light-transmissive structure on the reflectivity of the polarized light parallel to the reflective axis direction can also be alleviated as much as possible, thereby the reflective polarizer can have a relatively large reflective polarization selectivity ratio, and to avoid that the light-transmissive structure adversely affects the optical efficiency of the optical module.

Hereinafter, the optical module and the manufacturing method of the optical module provided by the embodiments of the present disclosure will be described in detail with reference to the accompanying drawings.

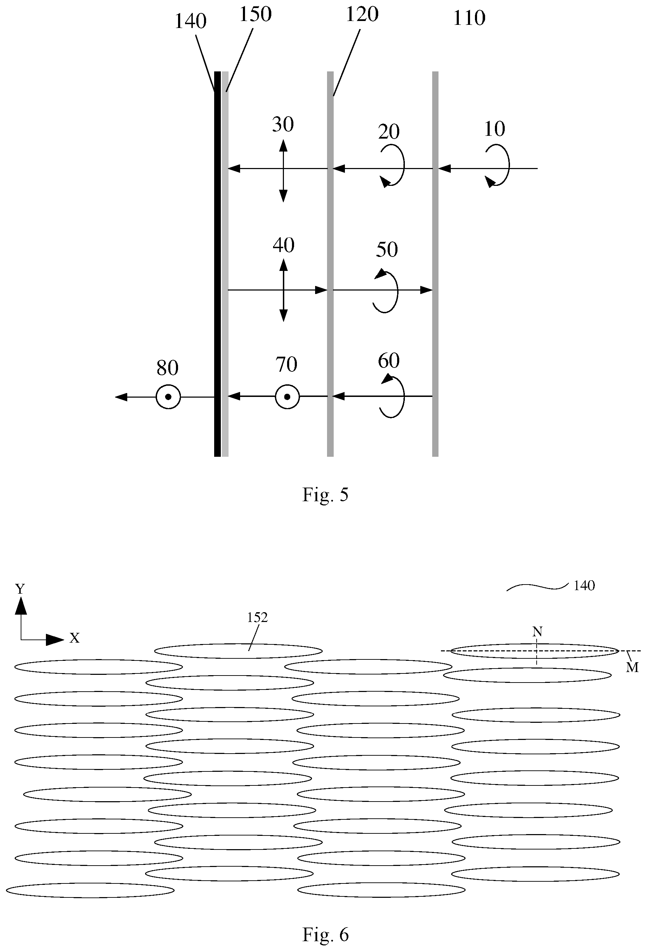

An embodiment of the present disclosure provides an optical module. Fig. 4 is a schematic structural diagram of an optical module according to an embodiment of the present disclosure, and Fig. 5 is a schematic view of an optical path of an optical module illustrated by Fig. 4. As illustrated by Fig. 4, the optical module has a light incident side S1 and a light-exiting side S2, and the optical module includes a first lens 100, a partial reflector 110, a phase retarder 120, a second lens 130, a reflective polarizer 140, and a light-transmissive structure 150. The partial reflector 110 is disposed on a side of the first lens 100 close to the light incident side S1, and the phase retarder 120 is disposed on a side of the first lens 100 away from the partial reflector 110 and configured to change light of a circular polarization state to light of a linear polarization state, or to change light of a linear polarization state to light of a circular polarization state. The second lens 130 is disposed on a side of the phase retarder 120 away to the first lens 100, the reflective polarizer 140 is disposed on a side of the second lens 130 close to the phase retarder 120, and the light-transmissive structure 150 is disposed on a side of the reflective polarizer 140 close to the phase retarder 120 and is spaced apart from the phase retarder 120. The partial reflector 110 is configured to transmit light incident from the light incident side S1, and is configured to reflect light incident from the phase retarder 120 and change the polarization state of the light. The reflective polarizer 140 has a reflective axis direction and a transmissive axis direction perpendicular to each other, the reflective polarizer 140 reflects linearly polarized light parallel to the reflective axis direction in the reflective axis direction and keeps a polarization state of the linearly polarized light unchanged, the reflective polarizer 140 transmits linearly polarized light parallel to the transmissive axis direction in the transmissive axis direction and keeps a polarization state of the linearly polarized light unchanged, the light-transmissive structure 150 has a lowest refraction direction, in the lowest refractive direction, a refractive index of the light-transmissive structure 150 for linearly polarized light parallel to the lowest refraction direction is the lowest, and an included angle between the lowest refractive direction and the reflective axis direction is greater than or equal to 70 degrees and less than or equal to 90 degrees.

As illustrated by Figs. 4 and 5, in order to more clearly illustrate the change in polarization state of the light, it is assumed that light incident from the light incident side is light 10 of a right-handed circular polarization state (schematically illustrated in the right-handed circular polarization state, but not limiting to embodiments of the present disclosure), after passing through the partial reflector 110, a polarization state of light 20 is unchanged, after passing through the phase retarder 120, the light 20 of the right-handed circular polarization state becomes light 30 of a first linear polarization state, when a polarization direction of the light 30 of the first linear polarization state is parallel to the reflective axis direction of the reflective polarizer 140, the light 30 is reflected by the reflective polarizer 140 as light 40 of the first linear polarization state, and after passing through the phase retarder 120 again, becomes light 50 of the right-handed circular polarization state, after being reflected by the partial reflector 110, because the half-wave loss, the light 50 of the right-handed circular polarization state becomes light 60 of the left-handed circular polarization state, the light 60 of the left-handed circular polarization state becomes light 70 of a second linear polarization state after passing through the phase retarder 120, the polarization direction of the light 70 of the second linear polarization state is parallel to the transmissive axis direction of the reflective polarizer 140, so that the light 70 passes through the reflective polarizer to become light 80, and enters the light-exiting side of the optical module

In the optical module provided by embodiments of the present disclosure, the side of the reflective polarizer 140 close to the phase retarder 120 is provided with the light-transmissive structure 150, the light-transmissive structure 150 has the lowest refraction direction, the refractive index of the light-transmissive structure 150 in the lowest refraction direction to polarized light parallel to the lowest refraction direction is lowest, and the included angle between the lowest refraction direction of the light-transmissive structure 150 and the reflective axis direction of the reflective polarizer 140 is greater than or equal to 70 degrees and less than or equal to 90 degrees, so that, for polarized light with a polarization direction perpendicular to the reflective axis direction, because the light-transmissive structure 150 has the lowest refraction direction, reflection of the polarized light with the polarization direction perpendicular to the reflective axis direction can be reduced, and the reflective polarization selectivity ratio of the reflective polarizer is improved, reducing polarized light with the polarization direction perpendicular to the reflective axis direction from entering the folded optical path, avoiding the occurrence of the phenomenon affecting the visual experience such as stray light and ghosting, and improving the clarity, contrast and visual experience of the near-eye display device in which the optical module is located.

As compared to an isotropic antireflection film of the existing art, because the isotropic antireflection film has no polarization selectivity ratio, the isotropic antireflection film reduces the reflectivity of polarized light perpendicular to the reflective axis direction as well as the reflectivity of polarized light parallel to the reflective axis direction. The light-transmissive structure 150 provided by embodiments of the present disclosure has the lowest refraction direction, the light-transmissive structure 150 is anisotropic, the light-transmissive structure 150 has different refractive indexes in the direction perpendicular to the reflective axis direction and parallel to the reflective axis direction, and the included angle of the lowest refraction direction of the light-transmissive structure 150 and the reflective axis direction of the reflective polarizer 140 is greater than or equal to 70 degrees and less than or equal to 90 degrees, thereby, while the reflectivity of the polarized light perpendicular to the reflective axis direction can be reduced, the influence of the light-transmissive structure 150 on the reflectivity of the polarized light parallel to the reflective axis direction can also be alleviated as much as possible, thereby the reflective polarizer 140 can have a relatively large reflective polarization selectivity ratio, and to avoid that the light-transmissive structure 150 adversely affects the optical efficiency of the optical module.

It should be noted that the reflective polarizer 140 and the phase retarder 120 are aligned, the reflective axis direction of the reflective polarizer 140 is in the middle of a fast axis and a slow axis of the phase retarder 120, so that the linear polarization state of light passing through the phase retarder 120 is parallel to the reflective axis direction of the reflective polarizer 140.

In some examples, as illustrated by Fig. 4, the first lens 100, the partial reflector 110, and the phase retarder 120 may form a first lens assembly. For example, the second lens 130, the reflective polarizer 140, and the light-transmissive structure 150 may form a second lens assembly. The first lens assembly is spaced apart from the second lens assembly.

In some examples, the partial reflector 110 may be a transflective film. For example, the phase retarder 120 may be a quarter wave plate.

In some examples, any of the partial reflector 110, the phase retarder 120 and the reflective polarizer 140 may have a flat or curved shape. For example, any of the partial reflector 110, the phase retarder 120 and the reflective polarizer 140 may be formed on a flat or curved lens. For example, materials of the first lens 100 and the second lens 130 may be glass or plastic, etc., embodiments of the present disclosure do not limit thereto.

For example, as illustrated by Figs. 4 and 5, after the light 60 of the left-handed circular polarization state passes through the phase retarder 120 to the light 70 of the second linear polarization state, a part of the light 70 of the second linear polarization state is reflected by the reflective polarizer 140 because the reflective polarizer 140 reflects a part of polarized light in a direction perpendicular to the reflective axis direction, however, the light 70 of the second linear polarization state is not used for imaging. Thus, adding the light-transmissive structure 150 on the reflective polarizer 140 may reduce the reflection of the light 70 of the second linear polarization state.

For example, as illustrated by Figs. 4 and 5, when there is an included angle between the polarization direction of the light 30 of the first linear polarization state and the reflective axis direction of the reflective polarizer 140 after the light 20 of the right circular polarization state passes through the phase retarder 120 to the light 30 of the first linear polarization state. For example, when the alignment of the reflective polarizer 140 and the phase retarder 120 is deviated, a polarized light component of the light 30 of the first linear polarization state in the direction perpendicular to the reflective axis direction is also partially reflected by the reflective polarizer 140. Thus, by adding the light-transmissive structure 150 to the reflective polarizer 140, the reflection of the polarized light component perpendicular to the reflective axis direction is also reduced.

In some examples, the included angle between the lowest refraction direction of the light-transmissive structure 150 and the reflective axis direction may be 90 degrees, so that the reflectivity of polarized light with a polarization direction perpendicular to the reflective axis direction may be minimized. Of course, embodiments of the present disclosure are not limited thereto, and the included angle may also be any value between 70 degrees and 90 degrees, for example.

In some examples, the reflective polarizer has a reflectivity $R\perp$ for polarized light with a polarization direction perpendicular to the reflective axis direction, and for convenience of illustration, it may be assumed that the reflective polarizer in the reflective axis direction is an isotropic optical medium having a refractive index n. According to optical principles, the light-transmissive structure has a refractive index n_low in the direction perpendicular to the reflective axis direction and a thickness t, if the following conditions can be met at a certain wavelength $\lambda$: 1) $n\_low=\sqrt{n}$, 2) t=$\lambda$/(4*n_low), then the reflectivity at this wavelength is 0. Therefore, the light-transmissive structure can be designed and verified to determine n_low and t such that $R\perp$ is as small as possible, so that the reflection of polarized light whose polarization direction is perpendicular to the direction of the reflective axis can be reduced as much as possible.

In some examples, the light-transmissive structure 150 has a highest refraction direction, in the highest refractive direction, a refractive index of the light-transmissive structure 150 for linearly polarized light parallel to the highest refraction direction is the highest, an included angle between the highest refraction direction and the reflective axis direction is less than or equal to 20 degrees. Because a refractive index of the light-transmissive structure 150 is generally lower than a refractive index of the reflective polarizer 140, the addition of a structure with a low refractive index to the reflective polarizer 140 results in a reduction in a reflectivity in the reflective axis direction of the reflective polarizer 140. By arranging the included angle between the highest refraction direction and the reflective axis direction less than or equal to 20 degrees, the reduction in reflection of polarized light parallel to the reflective axis direction can be alleviated as much as possible. For example, the included angle between highest refraction direction and the reflective axis direction may be 0 degrees, so that the reduction in reflection of polarized light parallel to the reflective axis direction by the light-transmissive structure 150 can be minimized. Of course, embodiments of the present disclosure are not limited thereto, and the included angle may also be any value between 0 degrees and 20 degrees, for example.

In this example, the light-transmissive structure 150 can reduce the reflectivity of polarized light perpendicular to the reflective axis direction while minimizing the effect on the reflectivity of polarized light parallel to the reflective axis direction by making the included angle between the highest refraction direction and the reflective axis direction less than or equal to 20 degrees, minimizing the effect of the light-transmissive structure 150 on the reflectivity of polarized light parallel to the reflective axis direction, thereby allowing the reflective polarizer 140 to have a relatively large reflective polarization selectivity ratio and avoiding the light-transmissive structure 150 adversely affecting the optical efficiency of the optical module.

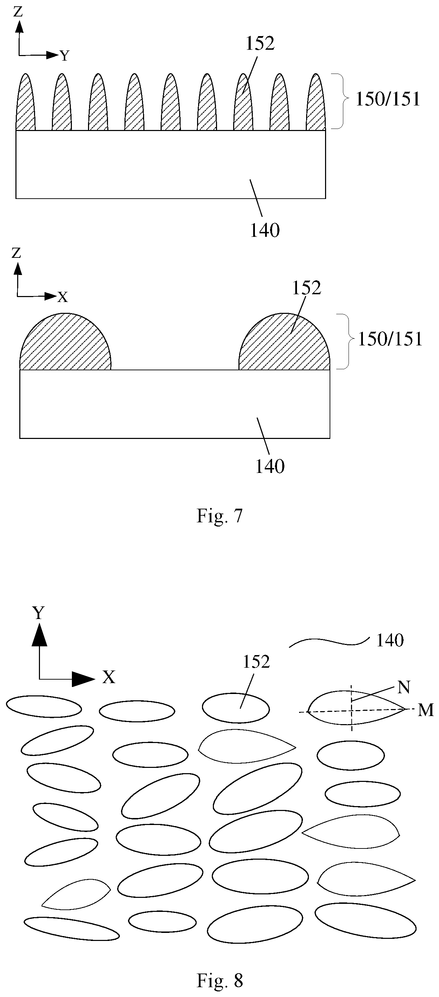

Fig. 6 is a schematic partial top view of a laminated structure of a reflective polarizer and a light-transmissive structure according to an embodiment of the present disclosure, and Fig. 7 is a schematic partial cross-sectional view of a laminate structure illustrated by Fig. 6. As illustrated by Fig. 6 and Fig. 7, the light-transmissive structure 150 includes a first structure layer 151, the first structure layer 151 includes a plurality of first protrusions 152, each of the plurality of first protrusions 152 protrudes toward the first lens assembly or the phase retarder 120 in a thickness direction of the first structure layer 151, that is to say, in a Z direction of the figure. Figs. 6 and 7 schematically illustrate that the lowest refraction direction of the light-transmissive structure 150 is the X direction and the highest refraction direction of the light-transmissive structure 150 is the Y direction, but embodiments of the present disclosure are not limited thereto. A density of ones of the plurality of first protrusions 152 of the first structure layer 151 along the lowest refraction direction is less than a density of ones of the plurality of first protrusions 152 of the first structure layer 151 along other directions on a reference plane, and a density of ones of the plurality of first protrusions 152 along the highest refraction direction is greater than a density of ones of the plurality of first protrusions 152 along other directions on the reference plane. The reference plane is the plane where the lowest refraction direction and the highest refraction direction are located. Thus, the density of the first protrusions 152 of the lowest refraction direction is the smallest, and polarized light parallel to the lowest refraction direction can pass relatively fast, so that the refractive index is the lowest; the density of the first protrusions 152 of the highest refraction direction is the largest, and polarized light parallel to the highest refraction direction is more difficult to pass, so that the refractive index is the highest.

It is to be noted that the density referred to in the embodiments of the present disclosure refers to a degree of densification. For example, the minimum density of the first protrusions 152 in the lowest refraction direction indicates that the first protrusions 152 are sparsest in the lowest refraction direction and a number of the first protrusions 152 within a unit length in the lowest refraction direction is the minimum. For example, the greatest density of the first protrusions 152 in the highest refraction direction indicates that the first protrusions 152 are densest in the highest refraction direction and a number of the first protrusions 152 within the unit length in the highest refraction direction is the greatest.

In some examples, as illustrated by Figs. 6 and 7, the reflective axis direction of the reflective polarizer 140 is the Y direction, the transmissive axis direction of the reflective polarizer 140 is the X direction, the density of the first protrusions 152 of the light-transmissive structures 150 in the X direction is the smallest, the X direction is the lowest refraction direction of the light-transmissive structures 150, the density of the first protrusions 152 of the light-transmissive structures 150 in the Y direction is the largest, and the Y direction is the highest refraction direction of the light-transmissive structures 150. Thus, the lowest refraction direction of the light-transmissive structure 150 is perpendicular to the reflective axis direction, and the highest refraction direction of the light-transmissive structure 150 is parallel to the reflective axis direction. Of course, embodiments of the present disclosure are not limited thereto, and the arrangement and dimension of the first protrusions 152 may be different depending on the manufacturing process and the material of the light-transmissive structure 150.

In some examples, as illustrated by Figs. 6 and 7, a dimension of each of the plurality of first protrusions 152 in the lowest refraction direction is greater than a dimension of each of the plurality of first protrusions 152 in the highest refraction direction. It is thus possible to better minimize the density of the first protrusions 152 in the lowest refractive direction and to better maximize the density of the first protrusions 152 in the highest refractive direction.

For example, as illustrated by Figs. 6 and 7, a ratio of the dimension of the first protrusion 152 in the lowest refraction direction to the dimension of the first protrusion 152 in the highest refraction direction is greater than or equal to 3, and for example, the ratio may also be greater than or equal to 5.

In some examples, as illustrated by Fig. 6, an orthographic projection of each of the plurality of first protrusions 152 on the reference plane includes a maximum dimension along a major axis direction M, and included angles between the major axis directions of multiple first protrusions of the plurality of first protrusions and the lowest refraction direction are less than or equal to 25 degrees. Therefore, the smaller the included angle between the major axis direction M of the first protrusion 152 and the lowest refraction direction, the more the major axis direction M of the first protrusion 152 deviates to the lowest refraction direction, and the maximum dimension of the first protrusion 152 is arranged as much as possible along the lowest refraction direction, so that it is better to make the density of the first protrusion 152 in the lowest refractive direction smaller., and the lower the refractive index in the lowest refraction direction can be realized. For example, the included angles between the major axis directions of multiple first protrusions of the plurality of first protrusions and the lowest refraction direction are less than or equal to 15 degrees. For example, the angle may be any value within 25 degrees.

For example, Fig. 6 schematically shows that the included angle between the major axis direction M of each of the plurality of first protrusions 152 and the lowest refraction direction is 0 degrees, the major axis directions M of the plurality of first protrusions 152 extend in a same direction, i.e., the direction is the lowest refraction direction, and the maximum dimensions of the plurality of first protrusions 152 are arranged in the lowest refraction direction, so that it is better to make the density of the first protrusions 152 in the lowest refractive direction relatively small, the refractive index in the lowest refraction direction can be relatively lower.

In some examples, as illustrated by Figs. 6 and 7, the orthographic projection of each of the plurality of first protrusions 152 on the reference plane includes a minor axis direction N perpendicular to the major axis direction M, and included angles between the minor axis directions N of multiple first protrusions 152 of the plurality of first protrusions 152 and the highest refraction direction are less than or equal to 25 degrees. Therefore, the smaller the included angle between the minor axis direction N of the first protrusion 152 and the highest refraction direction, the more the minor axis direction N of the first protrusion 152 deviates to the highest refraction direction, and the short axis of the first protrusion 152 is arranged as much as possible along the highest refraction direction, so that the greater the density of the first protrusion 152 in the highest refraction direction can be better achieved, and the higher the refractive index in the highest refraction direction can be achieved. For example, the included angles between the minor axis directions N of multiple first protrusions 152 of the plurality of first protrusions 152 and the highest refraction direction are less than or equal to 15 degrees. For example, the included angle may be any value within 25 degrees.

For example, Fig. 6 schematically shows that the included angle between the minor axis direction N of each of the plurality of first protrusions 152 and the highest refraction direction is 0 degrees, and that the minor axis directions N of the plurality of first protrusions 152 extend in a same direction, the direction is the highest refraction direction.

It should be noted that the introduction of the major axis direction M and the minor axis direction N does not define the orthographic projection of the first protrusion 152 on the reference plane as an ellipse, the major axis direction M is merely used to illustrate a direction in which the maximum dimension is located, while the minor axis direction N is perpendicular to the major axis direction M. For example, a minor axis of the first protrusion 152 may be defined as a line segment or chord that intercepts the orthographic projection of the first protrusion 152 on the reference plane along a straight line passing through a midpoint of the maximum dimension in the minor axis direction N. For example, the orthographic projection of the first protrusion 152 on the reference plane may be an ellipse, but is not limited to an ellipse, but may be other regular or irregular patterns.

In some examples, as illustrated by Figs. 6 and 7, a gap between two adjacent ones of the plurality of first protrusions 152 in the lowest refraction direction is larger than a gap between two adjacent ones of the plurality of first protrusions 152 in the highest refraction direction. Thus, the refractive index in the lowest refractive direction can be better minimized and the refractive index in the highest refractive direction can be better maximized.

In some examples, as illustrated by Figs. 6 and 7, the gap between two adjacent ones of the plurality of first protrusions 152 in the lowest refractive direction is larger than a gap between two adjacent first protrusions 152 in other directions within the reference plane. Thus, the refractive index in the lowest refractive direction can be better minimized.

In some examples, the gap between two adjacent ones of the plurality of first protrusions 152 in the highest refraction direction is smaller than the gap between two adjacent first protrusions 152 in other directions within the reference plane. Thus, the refractive index in the highest refractive direction can be better maximized.

In some examples, as illustrated by Fig. 6, multiple first protrusions 152 of the plurality of first protrusions 152 overlap along the highest refraction direction and multiple first protrusions 152 of the plurality of first protrusions 152 overlap along the lowest refraction direction. Thus, the plurality of first protrusions 152 can be arranged more densely in the lowest refractive direction and the highest refractive direction, so that the laminated structure of the reflective polarizer 140 and the light-transmissive structure 150 has better optical performance, better reduction in reflection in the direction perpendicular to the reflective axis, and reduction in reflection of polarized light in the direction parallel to the reflective axis is alleviated as much as possible.

Fig. 8 is a schematic partial top view of another laminate structure of a reflective polarizer and a light-transmissive structure according to an embodiment of the present disclosure. As illustrated by Fig. 8, the lowest refraction direction of the light-transmissive structure 150 is the X direction, the major axis directions M of multiple first protrusions 152 of the light-transmissive structure 150 are not arranged in the same direction, the major axis directions M of multiple first protrusions 152 are not the same, and shapes and dimensions of the plurality of first protrusions 152 are not the same. However, the included angles between the major axis directions M of multiple first protrusions 152 of the plurality of first protrusions 152 and the lowest refraction direction (i.e., the X direction) are less than or equal to 25 degrees. Of course, embodiments of the present disclosure are not limited thereto, and the included angle may be less than or equal to 15 degrees, for example.

For example, as illustrated by Fig. 8, the highest refraction direction of the light-transmissive structure 150 is the Y direction, the minor axis directions N of multiple first protrusions 152 of the plurality of first protrusions 152 of the light-transmissive structure 150 are not arranged in the same direction, and the minor axis directions N of multiple first protrusions 152 of the plurality of first protrusions 152 are not the same. However, the included angles between the minor axis directions N of multiple first protrusions 152 of the plurality of first protrusions 152 and the highest refraction direction are less than or equal to 25 degrees. Of course, embodiments of the present disclosure are not limited thereto, and the included angle may be less than or equal to 15 degrees, for example. Fig. 8 is an exemplary illustration of the arrangement of the plurality of first protrusions 152 and is not intended to limit embodiments of the present disclosure.

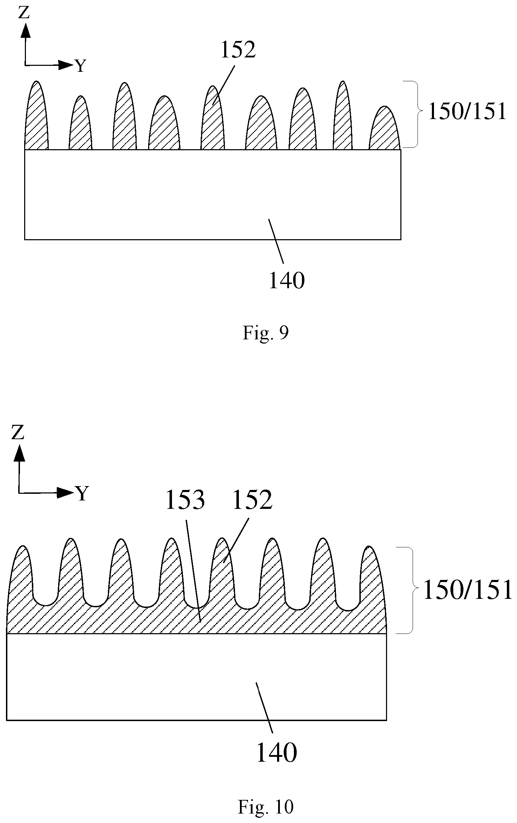

Fig. 9 is a schematic partial cross-sectional view of another laminated structure of a reflective polarizer and a light-transmissive structure according to an embodiment of the present disclosure. As illustrated by Fig. 9, dimensions of the plurality of first protrusions 152 in a thickness direction of the first structure layer 151, that is to say, a Z direction as illustrated by the drawing, is not equal, and embodiments of the present disclosure are not limited thereto.

Fig. 10 is a schematic partial cross-sectional view of another laminated structure of a reflective polarizer and a light-transmissive structure according to an embodiment of the present disclosure. As illustrated by Fig. 10, the first structure layer 151 further includes a base layer 153, and the plurality of first protrusions 152 are located on a side of the base layer 153 away from the reflective polarizer 140. Dimensions of the plurality of first protrusions 152 in Z direction and Y direction are schematically shown to be the same, and embodiments of the present disclosure are not limited thereto, and may be different.

In some examples, as illustrated by Fig. 10, the base layer 153 and the plurality of first protrusions 152 are of an integral structure. The light-transmissive structure 150 may be formed with film layers of different thicknesses. If the thickness of the film layer is relatively thin, for example, the thickness of the film layer is within 300 nm, the first structure layer 151 may include only the plurality of first protrusions 152 (e.g., as illustrated by Fig. 7). If the thickness of the film layer is relatively thick, for example, the thickness of the film layer exceeds 300 nm, the first structure layer 151 may include the base layer 153, the base layer 153 and the plurality of first protrusions 152 are of the same material, and the base layer 153 and the plurality of first protrusions 152 are of an integral structure.

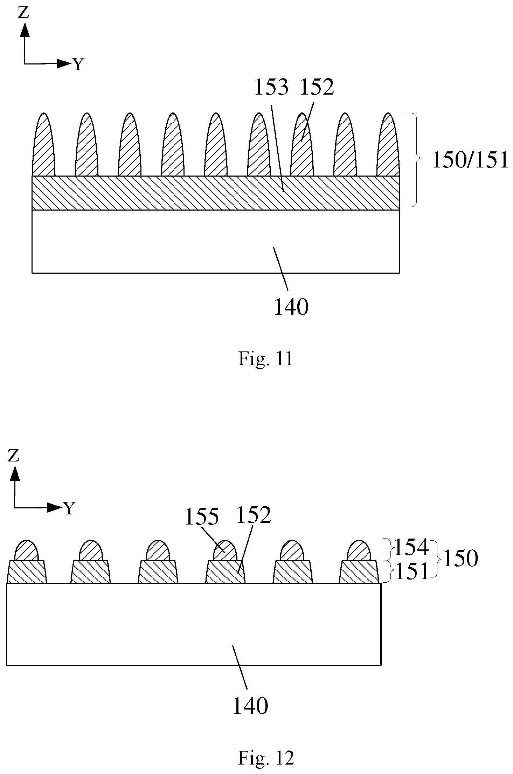

Fig. 11 is a schematic partial cross-sectional view of another laminated structure of a reflective polarizer and a light-transmissive structure according to an embodiment of the present disclosure. As illustrated by Fig. 11, the base layer 153 is an adhesive layer so that the first structure layer 151 can be better attached to the reflective polarizer 140. Embodiments of the present disclosure do not limit the material of the adhesive layer.

In some examples, as illustrated by Fig. 11, the base layer 153 may be an optical device, such that an optical function may be implemented. For example, an refractive index of the base layer 153 may be greater than the refractive index of the reflective polarizing film, for example, the refractive index of the base layer 153 is further greater than the refractive index of a structure in which the plurality of first protrusions 152 are located. Of course, embodiments of the present disclosure are not limited thereto and may be adjusted according to the design of the light-transmissive structure 150 and the optical module. It should be noted that the refractive index here refers to a refractive index of a certain polarization direction.

Fig. 12 is a schematic partial cross-sectional view of another laminated structure of a reflective polarizer and a light-transmissive structure according to an embodiment of the present disclosure. As illustrated by Fig. 12, the light-transmissive structure 150 further includes a second structure layer 154, the second structure layer 154 is disposed in stack with the first structure layer 151 and on a side of the first structure layer 151 away from the reflective polarizer 140. The second structure layer 154 includes a plurality of second protrusions 155 which protrude in a thickness direction of the second structure layer 154, i.e., Z direction as shown, toward the first lens assembly or the phase retarder 120. By disposing the second structure layer 154, the light-transmissive structure 150 can be optimized and designed in the thickness direction of the light-transmissive structure 150. For example, it can make the refractive index of the light-transmissive structure 150 gradually change in the thickness direction of the light-transmissive structure 150, so that the light-transmissive structure 150 can have a relatively good reflection-reducing effect for as many wavelengths as possible.

**In** some examples, as illustrated by Fig. 12, a material of the second protrusion 155 and the material of the first protrusion 152 are different. For example, orthographic projections of the plurality of second protrusions 155 on the reference plane fall within the orthographic projections of the plurality of first protrusions 152 on the reference plane.

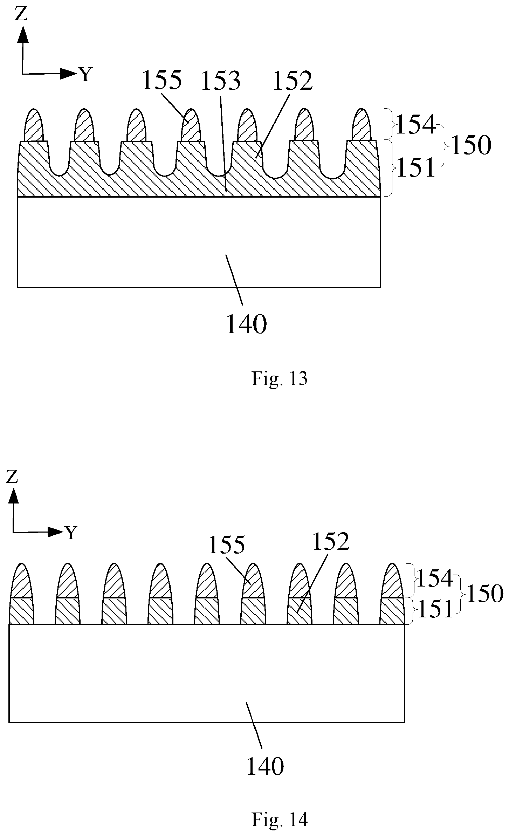

Fig. 13 is a schematic partial cross-sectional view of another laminated structure of a reflective polarizer and a light-transmissive structure according to an embodiment of the present disclosure. As illustrated by Fig. 13, the materials of the second protrusions 155 and the first protrusions 152 are different, orthographic projections of the plurality of second protrusions 155 on the reference plane fall within the orthographic projections of the plurality of first protrusions 152 on the reference plane, and the first structure layer 151 further includes the base layer 153, and the base layer 153 is the same material as the first protrusions 152. Thus, it can make the refractive index of the light-transmissive structure 150 gradually and slowly change in the thickness direction of the light-transmissive structure 150, so that the light-transmissive structure 150 can have a better reflection-reducing effect for all wavelengths.

Fig. 14 is a schematic partial cross-sectional view of another laminated structure of a reflective polarizer and a light-transmissive structure according to an embodiment of the present disclosure. As illustrated by Fig. 14, the materials of the second protrusions 155 and the first protrusions 152 are different, and the orthographic projections of the plurality of second protrusions 155 on the reference plane overlap with the orthographic projections of the plurality of first protrusions 152 on the reference plane.

**In** some examples, the light-transmissive structure 150 may further include a multi-layer structure, for example, a third structure layer is further laminated on a side of the second structure layer 154 away from the first structure layer 151, the third structure layer includes a plurality of third protrusions, the third protrusions protrude toward the first lens assembly or the phase retarder 120 in a thickness direction of the third structure layer. The light-transmissive structure 150 may thereby be optimized and designed in the thickness direction of the light-transmissive structure 150. The structure of the third protrusion is the same as the structure of the second protrusion 155, and will not be described in detail herein. Of course, embodiments of the present disclosure do not limit a number of layers of the multi-layer structure included by the light-transmissive structure 150.

In some examples, as illustrated by Figs. 6-14, the dimension of the first protrusion 152 along the thickness of the first structure layer 151 is in a range from 50 nm to 300 nm. For example, the dimension may be in a range from 70 nm to 150 nm. For example, the dimension may be any value between 50 nm and 300 nm. For example, as illustrated by Figs. 12-14, the dimension of the second protrusion 155 along the thickness of the second structure layer 154 may be in a range from 50 nm to 300 nm, for example, the dimension may be any value between 50 nm and 300 nm.

In some examples, as illustrated by Figs. 6-14, the maximum dimension in the major axis direction M of the first protrusion 152 is in a range between a few nanometers to a few hundred nanometers. For example, the dimension may be any value within the above-described range of values.

In some examples, as illustrated by Figs. 6-14, the dimension in the minor axis direction N of the first protrusion 152 may have a value in the range of 1 nm to 80 nm, for example, the dimension may have a value in the range of 5 nm to 30 nm. For example, the dimension may be any value between 1 nm and 80 nm.

In some examples, as illustrated by Figs. 6-14, a gap between two adjacent first protrusions 152 has a value in a range of 1 nm to 80 nm. For example, the gap may have a value in a range of 5 nm to 30 nm. For example, the gap may be any value between 1 nm and 80 nm.

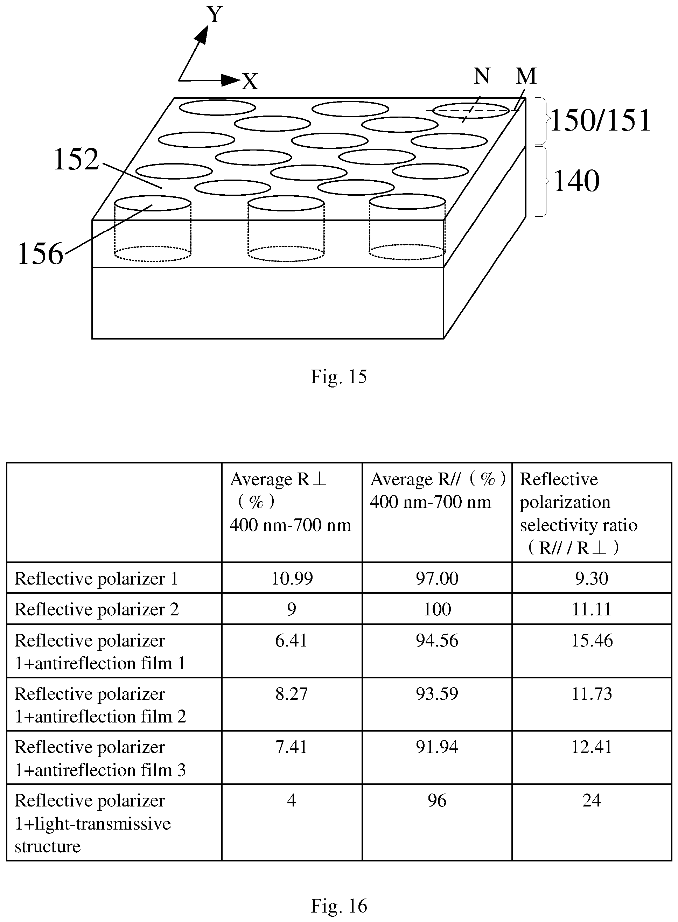

Fig. 15 is a partial structural schematic diagram of another laminated structure of a reflective polarizer and a light-transmissive structure according to an embodiment of the present disclosure. As illustrated by Fig. 15, the plurality of first protrusions 152 are communicated with each other such that the first structure layer 151 includes a plurality of first grooves 156, which additionally shows only inner dashed lines of the three first grooves 156 in order to clearly show the arrangement and opening shape of the plurality of first grooves 156. Fig. 15 schematically illustrates that the lowest refraction direction of the light-transmissive structure 150 is the X direction and the highest refraction direction of the light-transmissive structure 150 is the Y direction, but embodiments of the present disclosure are not limited thereto. A density of ones of the plurality of first grooves 156 of the first structure layer 151 along the lowest refraction direction is less than a density of ones of the plurality of first grooves 156 of the first structure layer 151 along other directions on the reference plane, and a density of ones of the plurality of first grooves 156 along the highest refraction direction is greater than a density of ones of the plurality of first grooves 156 along other directions on the reference plane, the reference plane is a plane in which the lowest refraction direction and the highest refraction direction are located. Thus, the density of the first grooves 156 of the lowest refraction direction is minimized, and polarized light parallel to the lowest refraction direction can pass relatively fast, so that the refractive index is the lowest; the density of the first grooves 156 of the highest refraction direction is the largest, and polarized light parallel to the highest refraction direction is more difficult to pass, so that the refractive index is the highest.

It is to be noted that the density referred to in the embodiments of the present disclosure refers to a degree of densification. For example, the minimum density of the first grooves 156 in the lowest refraction direction indicates that the first grooves 156 are sparsest in the lowest refraction direction and a number of the first grooves 156 within a unit length in the lowest refraction direction is the minimum. For example, the greatest density of the first grooves 156 in the highest refraction direction indicates that the first grooves 156 are densest in the highest refraction direction and a number of the first grooves 156 within the unit length in the highest refraction direction is the greatest

In some examples, as illustrated by Fig. 15, the Y direction is the reflective axis direction of the reflective polarizer 140, the X direction is the transmissive axis direction of the reflective polarizer 140, the density of the first grooves 156 of the light-transmissive structure 150 in the X direction is the smallest, the X direction is the lowest refraction direction of the light-transmissive structure 150, the density of the first grooves 156 of the light-transmissive structure 150 in the Y direction is the largest, and the Y direction is the highest refraction direction of the light-transmissive structure 150. Thus, the lowest refraction direction of the light-transmissive structure 150 is perpendicular to the reflective axis direction, and the highest refraction direction of the light-transmissive structure 150 is parallel to the reflective axis direction. Of course, embodiments of the present disclosure are not limited thereto, and the arrangement and dimension of the first grooves 156 may be different depending on the manufacturing process and the material of the light-transmissive structure 150.

In some examples, as illustrated by Fig. 15, a dimension of the first groove 156 along the lowest refractive direction is greater than a dimension of the first groove 156 along the highest refractive direction. Thus, it can be better to minimize the density of the first grooves 156 in the lowest refractive direction and better maximize the density of the first grooves 156 in the highest refractive direction.

In some examples, as illustrated by Fig. 15, a ratio of the dimension of the first groove 156 along the lowest refraction direction to the dimension of the first groove 156 along the highest refraction direction is greater than or equal to 3, for example, the ratio may also be greater than or equal to 5.

In some examples, as illustrated by Fig. 15, an orthographic projection of the first groove 156 on the reference plane includes a maximum dimension along a major axis direction M, included angles between the major axis directions M of multiple first grooves 156 of the plurality of first grooves 156 and the lowest refraction direction are less than or equal to 25 degrees. Therefore, the smaller the included angle between the major axis direction M of the first groove 156 and the lowest refraction direction, the more the major axis direction M of the first groove 156 deviates to the lowest refraction direction, and the maximum dimension of the first groove 156 is arranged as much as possible along the lowest refraction direction, so that it is better to make the density of the first grooves 156 in the lowest refractive direction relatively small, and the lower the refractive index in the lowest refraction direction can be realized. For example, the included angles between the major axis directions of multiple first grooves 156 of the plurality of first grooves 156 and the lowest refraction direction are less than or equal to 15 degrees. For example, the angle may be any value within 25 degrees.

For example, Fig. 15 schematically shows that the included angle between the major axis direction M of each of the plurality of first grooves 156 and the lowest refraction direction is 0 degrees, the major axis directions M of the plurality of first grooves 156 extend in a same direction, i.e., the direction is the lowest refraction direction, and the maximum dimensions of the plurality of first grooves 156 are arranged in the lowest refraction direction, so that it is better to make the density of the first grooves 156 in the lowest refractive direction relatively small, the refractive index in the lowest refraction direction can be relatively lower.

In some examples, as illustrated by Fig. 15, the orthographic projection of each of the plurality of first grooves 156 on the reference plane includes a minor axis direction N perpendicular to the major axis direction M, and included angles between the minor axis directions N of multiple first grooves 156 of the plurality of first grooves 156 and the highest refraction direction are less than or equal to 25 degrees. Therefore, the smaller the included angle between the minor axis direction N of the first groove 156 and the highest refraction direction, the more the minor axis direction N of the first groove 156 deviates to the highest refraction direction, and the short axis of the first groove 156 is arranged as much as possible along the highest refraction direction, so that the greater the density of the first groove 156 in the highest refraction direction can be better achieved, and the higher the refractive index in the highest refraction direction can be better achieved. For example, the included angles between the minor axis directions N of multiple first groove 156 of the plurality of first groove 156 and the highest refraction direction are less than or equal to 15 degrees. For example, the included angle may be any value within 25 degrees.

For example, Fig. 15 schematically shows that the included angle between the minor axis direction N of each of the plurality of first grooves 156 and the highest refraction direction is 0 degrees, and that the minor axis directions N of the plurality of first grooves 156 extend in a same direction, the direction is the highest refraction direction

It should be noted that the introduction of the major axis direction M and the minor axis direction N does not define the orthographic projection of the first groove 156 on the reference plane as an ellipse, the major axis direction M is merely used to illustrate a direction in which the maximum dimension is located, while the minor axis direction N is perpendicular to the major axis direction M. For example, a minor axis of the first groove 156 may be defined as a line segment or chord that intercepts the orthographic projection of the first groove 156 on the reference plane along a straight line passing through a midpoint of the maximum dimension in the minor axis direction N. For example, the orthographic projection of the first groove 156 on the reference plane may be an ellipse, but is not limited to an ellipse, but may be other regular or irregular patterns.

In some examples, as illustrated by Fig. 15, a gap between two adjacent ones of the plurality of first grooves 156 in the lowest refraction direction is larger than a gap between two adjacent ones of the plurality of first grooves 156 in the highest refraction direction. Thus, the refractive index of the first grooves 156 in the lowest refractive direction can be better minimized and the refractive index of the first grooves 156 in the highest refractive direction can be better maximized.

In some examples, as illustrated by Fig. 15, the gap between two adjacent ones of the plurality of first grooves 156 in the lowest refractive direction is larger than a gap between two adjacent first grooves 156 in other directions within the reference plane. Thus, the refractive index in the lowest refractive direction can be better minimized

In some examples, the gap between two adjacent ones of the plurality of first grooves 156 in the highest refraction direction is smaller than the gap between two adjacent first grooves 156 in other directions within the reference plane. Thus, the refractive index in the highest refractive direction can be better maximized.

In some examples, as illustrated by Fig. 15, multiple first grooves 156 of the plurality of first grooves 156 overlap along the highest refraction direction and multiple first grooves 156 of the plurality of first grooves 156 overlap along the lowest refraction direction. Thus, the plurality of first grooves 156 can be arranged more densely in the lowest refraction direction and the highest refractive direction, so that the laminated structure of the reflective polarizer 140 and the light-transmissive structure 150 has better optical performance, better reduction in reflection in the direction perpendicular to the reflective axis, and reduction in reflection of polarized light in the direction parallel to the reflective axis is alleviated as much as possible.

In some examples, the major axis directions M of the plurality of first grooves 156 of the light-transmissive structure 150 may not be arranged in the same direction, the major axis directions M of the plurality of first grooves 156 may not be the same, and the shapes and dimensions of the plurality of first grooves 156 may not be the same. However, the included angles between the major axis directions M of multiple first grooves 156 of the plurality of first grooves 156 and the lowest refraction direction (i.e., the X direction) are less than or equal to 25 degrees. Of course, embodiments of the present disclosure are not limited thereto, and the included angle may be less than or equal to 15 degrees, for example.

In some examples, the minor axis directions N of multiple first grooves 156 of the plurality of first grooves 156 of the light-transmissive structure 150 are not arranged in the same direction, and the minor axis directions N of multiple first grooves 156 of the plurality of first grooves 156 are not the same. However, the included angles between the minor axis directions N of multiple first grooves 156 of the plurality of first grooves 156 and the highest refraction direction are less than or equal to 25 degrees. Of course, embodiments of the present disclosure are not limited thereto, and the included angle may be less than or equal to 15 degrees.

In some examples, as illustrated in Fig. 15, depth dimensions of the first plurality of grooves 156 may be unequal, as embodiments of the present disclosure are not limited thereto.

In some examples, the plurality of second protrusions 155 of the second structure layer 154 included by the light-transmissive structure 150 may also be communicated with each other such that the second structure layer 154 includes a plurality of second grooves, orthographic projections of the plurality of first grooves 156 on the reference plane fall within orthographic projections of the plurality of second grooves on the reference plane, or the orthographic projections of the plurality of first grooves 156 on the reference plane overlap with the orthographic projections of the plurality of second grooves on the reference plane. Thereby, the light-transmissive structure 150 may be optimized and designed in the thickness direction of the light-transmissive structure 150. For example, it can make the refractive index of the light-transmissive structure 150 gradually change in the thickness direction of the light-transmissive structure 150, so that the light-transmissive structure 150 can have a relatively good reflection-reducing effect for as many wavelengths as possible.

In some examples, the refractive index of the light-transmissive structure 150 in the direction perpendicular to the reflective axis direction can be adjusted to be as low as possible or to be the lowest by adjusting the dimension or density of the first protrusion 152, the second protrusion 155, the first groove 156, or the second groove, so that the reflectivity of the reflective polarizer 140 in the direction perpendicular to the reflective axis direction can be reduced to the greatest extent. For example, the numerical range of the refractive index of the light-transmissive structure 150 in the direction perpendicular to the reflective axis direction may be from 1.15 to 1.35, for example, the numerical range of the refractive index may also be from 1.20 to 1.30. For example, the refractive index may be any value from 1.15 to 1.35.

Fig. 16 is a data comparison of reflective polarization selectivity ratio of a reflective polarizer and a light-transmissive structure according to an embodiment of the present disclosure. As illustrated by Fig. 16, the reflectivity (R⊥) of a reflective polarizer 1 and a reflective polarizer 2 in the direction perpendicular to the reflective axis direction of 10.99%, 9%, respectively, as calculated by the average value, and polarized light with a polarization direction perpendicular to the reflective axis direction is also reflected, thereby causing undesirable phenomena such as stray light and ghosting that affect the visual experience.

With the addition of isotropic antireflection films on the reflective polarizer 1, for example, with three different isotropic antireflection films 1, 2 and 3, compared to without the addition of antireflection films, the reflectivity (R⊥) in the direction perpendicular to the reflective axis direction is lower than the reflectivity (R⊥) without antireflection film, with values of R⊥ being 6.41%, 8.27%, 7.41%, respectively; compared to without the addition of antireflection films, the reflective polarization selectivity ratio (R//R⊥) is also improved. However, the corresponding reflectivity (R//) in the direction parallel to the reflective axis direction is significantly reduced, thereby affecting the optical efficiency.

After adding the light-transmissive structure provided by embodiments of the present disclosure to the reflective polarizer 1, the reflectivity (R⊥) perpendicular to the reflective axis direction is 4%, which is significantly lower than the reflectivity (R⊥) perpendicular to the reflective axis direction after adding the isotropic antireflection film, meanwhile, the reflectivity (R//) parallel to the reflective axis direction is 96%, which is significantly higher than the reflectivity (R//) parallel to the reflective axis direction after adding the isotropic antireflection film, and decreased little compared to the reflectivity (R//) parallel to the reflective axis direction of the reflective polarizer without adding the antireflection film. There is also a significant increase in the reflective polarization selectivity ratio (R//R⊥), which in this example has a value of 24, which is substantially twice the reflective polarization selectivity ratio after the addition of the isotropic antireflection film, so that the reflectivity ratio of polarized light perpendicular to the reflective axis direction can be reduced without adversely affecting the optical efficiency.

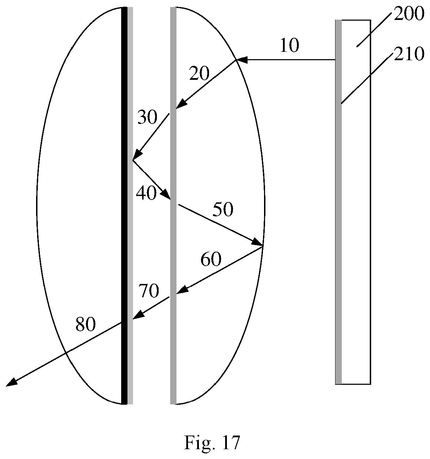

An embodiment of the present disclosure further provides a near-eye display device. Fig. 17 shows a schematic structural diagram of a near-eye display device according to an embodiment of the present disclosure. As illustrated by Fig. 17, the near-eye display device includes any of the above-described optical modules, and a display 200 located on the light incident side of the optical module, with a polarizer 210 disposed on a side of the display close to the optical module, the polarizer 210 is configured to polarize light emitted from the display to light of a circular polarization state. Thus, the near-eye display device has advantageous effects corresponding to advantageous effects of the optical module, which will not be described in detail herein.

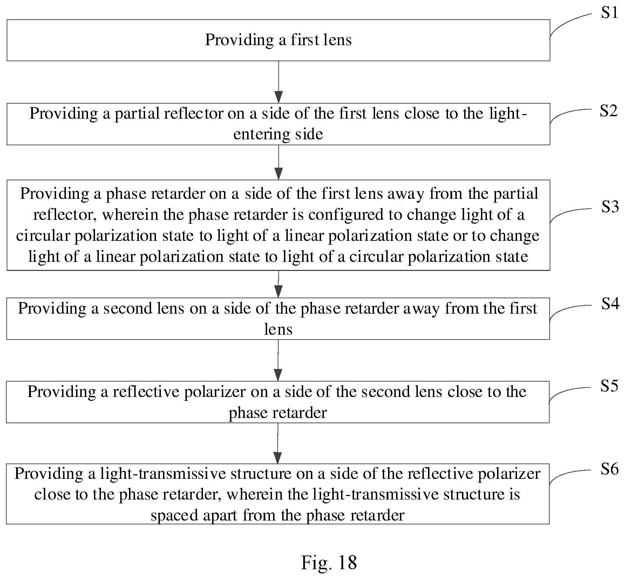

An embodiment of the present disclosure further provides a manufacturing method of an optical module. Fig. 18 is a flowchart of a manufacturing method of an optical module according to an embodiment of the present disclosure. The optical module having a light incident side and a light-exiting side, as illustrated by Fig. 18, the manufacturing method of manufacturing the optical module includes:

  S1: providing a first lens;
  S2: providing a partial reflector on a side of the first lens close to the light incident side;
  S3: providing a phase retarder on a side of the first lens away from the partial reflector, the phase retarder configured to change light of a circular polarization state to light of a linear polarization state or to change light of a linear polarization state to light of a circular polarization state;
  S4: providing a second lens on a side of the phase retarder away from the first lens;
  S5: providing a reflective polarizer on a side of the second lens close to the phase retarder; and
  S6: providing a light-transmissive structure on a side of the reflective polarizer close to the phase retarder, the light-transmissive structure disposed with a gap from the phase retarder.

The partial reflector in the manufacturing method is configured to transmit light incident from the light incident side, and is configured to reflect light incident from the phase retarder and change a polarization state of the light. The reflective polarizer has a reflective axis direction and a transmissive axis direction perpendicular to each other, the reflective polarizer reflects linearly polarized light parallel to the reflective axis direction in the reflective axis direction and keeps a polarization state of the linearly polarized light unchanged, the reflective polarizer transmits linearly polarized light parallel to the transmissive axis direction in the transmissive axis direction and keeps a polarization state of the linearly polarized light unchanged. The light-transmissive structure has a lowest refraction direction, in the lowest refractive direction, a refractive index of the light-transmissive structure for linearly polarized light parallel to the lowest refraction direction is the lowest. An included angle between the lowest refractive direction and the reflective axis direction is greater than or equal to 70 degrees and less than or equal to 90 degrees. Thus, for polarized light with a polarization direction perpendicular to the reflective axis direction, because the light-transmissive structure has the lowest refraction direction, reflection of the polarized light with the polarization direction perpendicular to the reflective axis direction can be reduced, and the reflective polarization selectivity ratio of the reflective polarizer is improved, reducing polarized light with the polarization direction perpendicular to the reflective axis direction from entering the folded optical path, avoiding the occurrence of the phenomenon affecting the visual experience such as stray light and ghosting, and improving the clarity, contrast and visual experience of the near-eye display device in which the optical module is located.

In some examples, the first lens assembly may be formed sequentially by step S1, step S2, and step S3. For example, the second lens assembly may be formed by Step 4, Step 5, and Step 6 in sequence. The formed first lens assembly is spaced apart from the second lens assembly.

For example, providing the light-transmissive structure on a side of the reflective polarizer close to the phase retarder includes forming a light-transmissive structure on a side of the reflective polarizer close to the phase retarder.

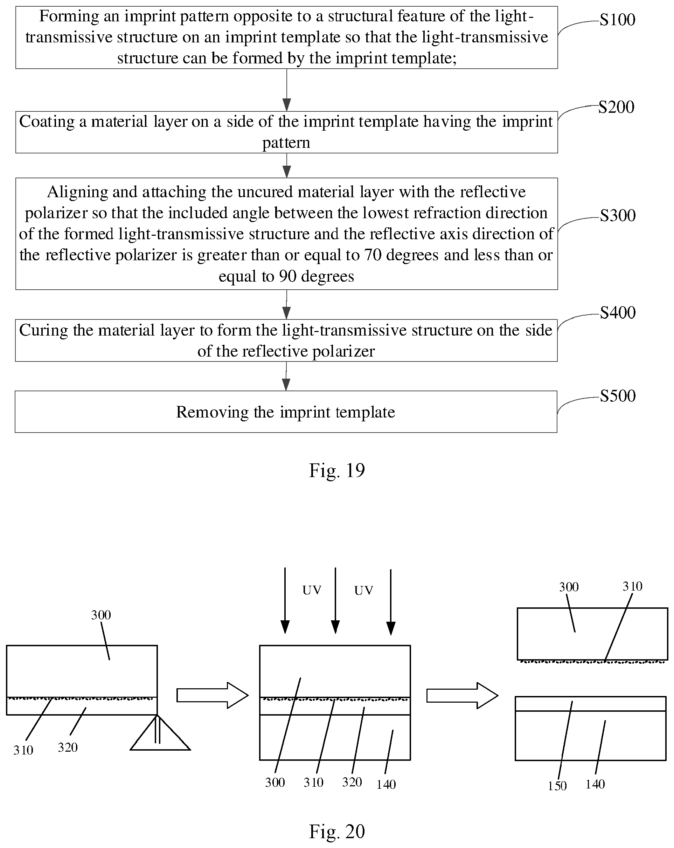

Fig. 19 is a flowchart of a manufacturing method for forming a light-transmissive structure on a side of a reflective polarizer according to an embodiment of the present disclosure. As illustrated by Fig. 19, forming the light-transmissive structure on a side of the reflective polarizer includes the following steps:

S100: forming an imprint pattern opposite to a structural feature of the light-transmissive structure on an imprint template so that the light-transmissive structure can be formed by the imprint template;

S200: coating a material layer on a side of the imprint template having the imprint pattern;

S300: aligning and attaching the uncured material layer with the reflective polarizer so that the included angle between the lowest refraction direction of the formed light-transmissive structure and the reflective axis direction of the reflective polarizer is greater than or equal to 70 degrees and less than or equal to 90 degrees;

S400: curing the material layer to form the light-transmissive structure on the side of the reflective polarizer;

S500: removing the imprint template.

**In** the manufacturing method provided by the embodiment of the present disclosure, by aligning and attaching the material layer and the reflective polarizer, the included angle between the lowest refraction direction of the light-transmissive structure formed on the reflective polarizer and the reflective axis direction of the reflective polarizer is greater than or equal to 70 degrees and less than or equal to 90 degrees, thereby, while the reflectivity of the polarized light perpendicular to the reflective axis direction can be reduced, the influence of the light-transmissive structure on the reflectivity of the polarized light parallel to the reflective axis direction can also be alleviated as much as possible, thereby the reflective polarizer can have a relatively large reflective polarization selectivity ratio, and reducing polarized light with the polarization direction perpendicular to the reflective axis direction from entering the folded optical path, avoiding the occurrence of the phenomenon affecting the visual experience such as stray light and ghosting, and improving the clarity, contrast and visual experience of the near-eye display device in which the optical module is located.

For example, the imprint template can be a polymer soft template, e.g., a material of the imprint template can be a material that is transparent to ultraviolet light, e.g., the material of the imprint template can be polydimethylsiloxane (PDMS), e.g., the imprint template can be transferred from a hard template etched by an electron beam.

For example, the material layer may be a transparent polymer layer. For example, the material layer is a UV-cured organic resin formula, and for example, it can be formed by main components such as acrylic monomer, acrylic polymer, crosslinking agent, UV initiator, etc. For example, in addition to the above-mentioned acrylic polymer materials, polymer materials such as liquid crystal polymer, polyester, polysiloxane, and inorganic materials such as titanium dioxide, zirconium dioxide, aluminum oxide, and silicon nitride can also be used without limitation.

For example, the material layer can be formed by slot coating, dimple coating, spin coating, or the like.

For example, the uncured material layer can be aligned and attached to the reflective polarizer by adjusting the imprint template. For example, the uncured material layer of may also be aligned and attached to the reflective polarizer by adjusting the reflective polarizer.

For example, ultraviolet light can be applied to cure the material layer such that there is a stronger bonding force between the material layer and the reflective polarizer than between the material layer and the imprint template.

Fig. 20 is a schematic diagram of another manufacturing method for forming a light-transmissive structure on a side of a reflective polarizer according to an embodiment of the present disclosure. As illustrated by Fig. 20, forming an anisotropic imprint pattern 310 on the imprint template 300, and an imprint pattern 310 is opposite to a structural feature of the light-transmissive structure 150. Coating a material layer 320 on a side of the imprint template 300 with the imprint pattern 310; aligning and attaching the uncured material layer 320 with the reflective polarizer 140 so that the included angle between the lowest refractive direction of the formed light-transmissive structure 150 and the reflective axis direction of the reflective polarizer 140 is greater than or equal to 70 degrees and less than or equal to 90 degrees; applying ultraviolet light UV to cure the material layer 320 to form a light-transmissive structure 150 on the reflective polarizer 140; removing the imprint template, so that the reflective polarizer 140 with the light-transmissive structure 150 can be formed.

**In** some examples, the imprint template may also be a cylindrical roller structure on which the imprint pattern is formed. For example, the imprint pattern may be transferred to the material layer by means of rolling.

In some examples, the material layer can also be coated on the reflective polarizer and then imprinted with an imprint template to form the light-transmissive structure.

**In** some examples, the light-transmissive structure can also be formed on the reflective polarizer by a "top-down" method, such as photolithography or self-assembled template etching, in which a material layer is first formed and then etched. For example, a "bottom-up" method, such as oblique angle coating and liquid crystal coating, can also be used to form the light-transmissive structure on the reflective polarizer.

There are several points which should be noted.

(1) In the drawings of the embodiments of the present disclosure, only the structures involved in the embodiments of the present disclosure are involved. Other structures can refer to the usual design.

(2) The features in the same embodiment and different embodiments of the present disclosure can be combined with each other without conflict.

The above are only the specific implementations of the present disclosure, but the scope of protection of the present disclosure is not limited thereto. Any person skilled in the art can easily conceive of variations or substitutions within the technical scope disclosed in the present disclosure, which should be included in the scope of protection of the present disclosure. Therefore, the scope of protection of the present disclosure shall be based on the scope of protection of the claims.

**Claims**

1. An optical module, having a light incident side and a light-exiting side, comprising:

   a first lens;
   a partial reflector, disposed on a side of the first lens close to the light incident side;
   a phase retarder, disposed on a side of the first lens away from the partial reflector, and configured to change light of a circular polarization state to light of a linear polarization state or to change light of a linear polarization state to light of a circular polarization state;
   a second lens, disposed on a side of the phase retarder away from the first lens;
   a reflective polarizer, disposed on a side of the second lens close to the phase retarder; and
   a light-transmissive structure, disposed on a side of the reflective polarizer close to the phase retarder and spaced apart from the phase retarder,
   wherein the partial reflector is configured to transmit light incident from the light incident side and configured to reflect light incident from the phase retarder and change a polarization state of the light, the reflective polarizer has a reflective axis direction and a transmissive axis direction perpendicular to each other, the reflective polarizer reflects linearly polarized light parallel to the reflective axis direction in the reflective axis direction and keeps a polarization state of the linearly polarized light unchanged, the reflective polarizer transmits linearly polarized light parallel to the transmissive axis direction in the transmissive axis direction and keeps a polarization state of the linearly polarized light unchanged,

   the light-transmissive structure has a lowest refraction direction, in the lowest refractive direction, a refractive index of the light-transmissive structure for linearly polarized light parallel to the lowest refraction direction is the lowest, an included angle between the lowest refraction direction and the reflective axis direction is greater than or equal to 70 degrees and less than or equal to 90 degrees.

2. The optical module according to claim 1, wherein the light-transmissive structure has a highest refraction direction, in the highest refractive direction, a refractive index of the light-transmissive structure for linearly polarized light parallel to the highest refraction direction is the highest,
   an included angle between the highest refraction direction and the reflective axis direction is less than or equal to 20 degrees.

3. The optical module according to claim 2, wherein the light-transmissive structure comprises a first structure layer, the first structure layer comprises a plurality of first protrusions, each of the plurality of first protrusions protrudes toward the phase retarder in a thickness direction of the first structure layer,

   a density of ones of the plurality of first protrusions of the first structure layer along the lowest refraction direction is less than a density of ones of the plurality of first protrusions of the first structure layer along other directions on a reference plane, and a density of ones of the plurality of first protrusions along the highest refraction direction is greater than a density of ones of the plurality of first protrusions along other directions on the reference plane,
   the reference plane is a plane where the lowest refraction direction and the highest refraction direction are located.

4. The optical module according to claim 3, wherein a dimension of each of the plurality of first protrusions in the lowest refraction direction is greater than a dimension of each of the plurality of first protrusions in the highest refraction direction.

5. The optical module according to claim 4, wherein an orthographic projection of each of the plurality of first protrusions on the reference plane comprises a maximum dimension along a major axis direction, and included angles between the major axis directions of multiple first protrusions of the plurality of first protrusions and the lowest refraction direction are less than or equal to 25 degrees.

6. The optical module according to claim 5, wherein the orthographic projection of each of the plurality of first protrusions on the reference plane comprises a minor axis direction perpendicular to the major axis direction, and included angles between the minor axis directions of multiple first protrusions of the plurality of first protrusions and the highest refraction direction are less than or equal to 25 degrees.

7. The optical module according to claim 3, wherein a gap between two adjacent ones of the plurality of first protrusions in the lowest refraction direction is larger than a gap between two adjacent ones of the plurality of first protrusions in the highest refraction direction.

8. The optical module according to any one of claims 3-7, wherein the first structure layer further comprises a base layer, and the plurality of first protrusions are located on a side of the base layer away from the reflective polarizer.

9. The optical module according to claim 8, wherein the base layer and the plurality of first protrusions are of an integral structure.

10. The optical module according to any one of claims 3-9, wherein the light-transmissive structure further comprises a second structure layer, the second structure layer is disposed in a stack with the first structure layer and on a side of the first structure layer away from the reflective polarizer,
the second structure layer comprises a plurality of second protrusions protruding toward the phase retarder in a thickness direction of the second structure layer.

11. The optical module according to claim 10, wherein a material of each of the plurality of second protrusions and a material of each of the plurality of first protrusions are different, orthographic projections of the plurality of second protrusions on the reference plane fall within orthographic projections of the plurality of first protrusions on the reference plane, or orthographic projections of the plurality of second protrusions on the reference plane overlap with orthographic projections of the plurality of first protrusions on the reference plane.

12. The optical module according to claim 10, wherein a material of each of the plurality of second protrusions and a material of each of the plurality of first protrusions are different, orthographic projections of the plurality of second protrusions on the reference plane fall within orthographic projections of the plurality of first protrusions on the reference plane, and the first structure layer further comprises a base layer, a material of the base layer is the same as the material of each of the plurality of first protrusions.

13. The optical module according to any one of claims 3-12, wherein a dimension of each of the plurality of first protrusions along the thickness direction of the first structure layer is in the range of 50 nm to 300 nm, a gap between two adjacent ones of the plurality of first protrusions is less than or equal to 80 nm.

14. The optical module according to any one of claims 3-13, wherein multiple first protrusions of the plurality of first protrusions overlap along the highest refraction direction and multiple first protrusions of the plurality of first protrusions overlap along the lowest refraction direction.

15. The optical module according to any one of claims 3-14, wherein the plurality of first protrusions are communicated with each other such that the first structure layer comprises a plurality of first grooves, a density of ones of the plurality of first grooves of the first structure layer along the lowest refraction direction is less than a density of ones of the plurality of first grooves of the first structure layer along other directions in the reference plane, and a density of ones of the plurality of first grooves along the highest refraction direction is greater than a density of ones of the plurality of first grooves along other directions on the reference plane.

16. A near-eye display device, comprising:

   the optical module according to any one of claims 1-15, and
   a display, located on the light incident side of the optical module,
   wherein a side of the display close to the optical module is provided with a polarizer, the polarizer is configured to polarize light emitted from the display into light of a circular polarization state.

17. A manufacturing method of an optical module, the optical module having a light incident side and a light-exiting side, the manufacturing method comprising:

   providing a first lens;

providing a partial reflector on a side of the first lens close to the light incident side;

providing a phase retarder on a side of the first lens away from the partial reflector, wherein the phase retarder is configured to change light of a circular polarization state to light of a linear polarization state or to change light of a linear polarization state to light of a circular polarization state;

providing a second lens on a side of the phase retarder away from the first lens;

providing a reflective polarizer on a side of the second lens close to the phase retarder;

providing a light-transmissive structure on a side of the reflective polarizer close to the phase retarder, wherein the light-transmissive structure is spaced apart from the phase retarder,

wherein the partial reflector is configured to transmit light incident from the light incident side and configured to reflect light incident from the phase retarder and change a polarization state of the light, the reflective polarizer has a reflective axis direction and a transmissive axis direction perpendicular to each other, the reflective polarizer reflects linearly polarized light parallel to the reflective axis direction in the reflective axis direction and keeps a polarization state of the linearly polarized light unchanged, the reflective polarizer transmits linearly polarized light parallel to the transmissive axis direction in the transmissive axis direction and keeps a polarization state of the linearly polarized light unchanged,

the light-transmissive structure has a lowest refraction direction, in the lowest refractive direction, a refractive index of the light-transmissive structure for linearly polarized light parallel to the lowest refraction direction is the lowest,

an included angle between the lowest refraction direction and the reflective axis direction is greater than or equal to 70 degrees and less than or equal to 90 degrees.

Fig. 1

Fig. 2

Fig. 3

Fig. 4

140　150　　　　120　　　　110

30

20

10

40

50

80　　　70　　　60

Fig. 5

Y

X

152

140

N

M

Fig. 6

Fig. 7

Fig. 8

Z

Y

152

150/151

140

Fig. 9

Z

Y

153    152

150/151

140

Fig. 10

Z
Y

153 152

150/151

140

Fig. 11

Z
Y

155 152

154
151
150

140

Fig. 12

Z

Y

155    153    152

154 } 150

151 }

140

Fig. 13

Z

Y

155    152

154 } 150

151 }

140

Fig. 14

Fig. 15

| | Average R⊥ ( % ) 400 nm-700 nm | Average R// ( % ) 400 nm-700 nm | Reflective polarization selectivity ratio ( R// / R⊥ ) |
|---|---|---|---|
| Reflective polarizer 1 | 10.99 | 97.00 | 9.30 |
| Reflective polarizer 2 | 9 | 100 | 11.11 |
| Reflective polarizer 1+antireflection film 1 | 6.41 | 94.56 | 15.46 |
| Reflective polarizer 1+antireflection film 2 | 8.27 | 93.59 | 11.73 |
| Reflective polarizer 1+antireflection film 3 | 7.41 | 91.94 | 12.41 |
| Reflective polarizer 1+light-transmissive structure | 4 | 96 | 24 |

Fig. 16

Fig. 17

Providing a first lens — S1

Providing a partial reflector on a side of the first lens close to the light-entering side — S2

Providing a phase retarder on a side of the first lens away from the partial reflector, wherein the phase retarder is configured to change light of a circular polarization state to light of a linear polarization state or to change light of a linear polarization state to light of a circular polarization state — S3

Providing a second lens on a side of the phase retarder away from the first lens — S4

Providing a reflective polarizer on a side of the second lens close to the phase retarder — S5

Providing a light-transmissive structure on a side of the reflective polarizer close to the phase retarder, wherein the light-transmissive structure is spaced apart from the phase retarder — S6

Fig. 18

Forming an imprint pattern opposite to a structural feature of the light-transmissive structure on an imprint template so that the light-transmissive structure can be formed by the imprint template; — S100

Coating a material layer on a side of the imprint template having the imprint pattern — S200

Aligning and attaching the uncured material layer with the reflective polarizer so that the included angle between the lowest refraction direction of the formed light-transmissive structure and the reflective axis direction of the reflective polarizer is greater than or equal to 70 degrees and less than or equal to 90 degrees — S300

Curing the material layer to form the light-transmissive structure on the side of the reflective polarizer — S400

Removing the imprint template — S500

Fig. 19

Fig. 20

## INTERNATIONAL SEARCH REPORT

| International application No. |
|---|
| **PCT/CN2024/111425** |

**A. CLASSIFICATION OF SUBJECT MATTER**

G02B27/28(2006.01)i

According to International Patent Classification (IPC) or to both national classification and IPC

**B. FIELDS SEARCHED**

Minimum documentation searched (classification system followed by classification symbols)

IPC:G02B27 G02B5

Documentation searched other than minimum documentation to the extent that such documents are included in the fields searched

Electronic data base consulted during the international search (name of data base and, where practicable, search terms used)

CNTXT, ENTXTC, DWPI, CNKI: 光学模组, 近眼, 头戴, 穿戴, 显示, 透镜, 相位延迟, 波片, 反射, 反光, 偏振, 偏光, 反射轴, 透射轴, 透过轴, 最低折射方向, 快轴, 慢轴, 反射偏振比, optical, module, eye+, display+, lens, phase delay, wave plate?, reflect+, polariz+, axis, fast, slow, ratio

**C. DOCUMENTS CONSIDERED TO BE RELEVANT**

| Category* | Citation of document, with indication, where appropriate, of the relevant passages | Relevant to claim No. |
|---|---|---|
| A | CN 115407507 A (GOERTEK OPTICAL TECHNOLOGY CO., LTD.) 29 November 2022 (2022-11-29)<br>      description, paragraphs 59, 79-85, 97, 117, 124, 145-149, and 191, and figures 1-17 | 1-17 |
| A | CN 105518496 A (DAI NIPPON PRINTING CO., LTD.) 20 April 2016 (2016-04-20)<br>      entire document | 1-17 |
| A | CN 112526754 A (SHENZHEN HUYNEW TECHNOLOGY CO., LTD.) 19 March 2021 (2021-03-19)<br>      entire document | 1-17 |
| A | CN 115268070 A (GOERTEK OPTICAL TECHNOLOGY CO., LTD.) 01 November 2022 (2022-11-01)<br>      entire document | 1-17 |
| A | US 2020348528 A1 (FACEBOOK TECHNOLOGIES, LLC) 05 November 2020 (2020-11-05)<br>      entire document | 1-17 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **04 September 2024** | **24 October 2024** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT
### Information on patent family members

International application No.

**PCT/CN2024/111425**

| Patent document cited in search report | | | Publication date (day/month/year) | Patent family member(s) | | | Publication date (day/month/year) |
|---|---|---|---|---|---|---|---|
| CN | 115407507 | A | 29 November 2022 | | None | | |
| CN | 105518496 | A | 20 April 2016 | TW | 201903443 | A | 16 January 2019 |
| | | | | TW | 201510588 | A | 16 March 2015 |
| | | | | TWI | 670528 | B | 01 September 2019 |
| | | | | KR | 20160055152 | A | 17 May 2016 |
| | | | | JP | 2015055680 | A | 23 March 2015 |
| | | | | US | 2016209564 | A1 | 21 July 2016 |
| | | | | US | 10310153 | B2 | 04 June 2019 |
| | | | | WO | 2015037369 | A1 | 19 March 2015 |
| | | | | CN | 107765358 | A | 06 March 2018 |
| CN | 112526754 | A | 19 March 2021 | CN | 213987036 | U | 17 August 2021 |
| | | | | WO | 2022121344 | A1 | 16 June 2022 |
| CN | 115268070 | A | 01 November 2022 | WO | 2024001238 | A1 | 04 January 2024 |
| US | 2020348528 | A1 | 05 November 2020 | WO | 2020226867 | A1 | 12 November 2020 |
| | | | | US | 11397329 | B2 | 26 July 2022 |
| | | | | TW | 202045982 | A | 16 December 2020 |
| | | | | TWI | 838517 | B | 11 April 2024 |
| | | | | EP | 3963386 | A1 | 09 March 2022 |
| | | | | US | 2020348527 | A1 | 05 November 2020 |
| | | | | US | 11500217 | B2 | 15 November 2022 |

Form PCT/ISA/210 (patent family annex) (July 2022)

**REFERENCES CITED IN THE DESCRIPTION**

**Patent documents cited in the description**

• CN 202311020645